# EUROPÄISCHE PATENTSCHRIFT

(11) **EP 0 835 569 B1**
(45) Veröffentlichungstag und Bekanntmachung des Hinweises auf die Patenterteilung: **23.05.2001**
(21) Anmeldenummer: 96917275.8
(22) Anmeldetag: 21.06.1996
(51) Int. Cl.: H04L 1/18

(54) **VERFAHREN ZUR WIEDERHOLUNG FEHLERHAFT ÜBERTRAGENER DATEN**
METHOD OF RE-SENDING INCORRECTLY TRANSMITTED DATA
PROCEDE DE REPETITION DE DONNEES TRANSMISES DE MANIERE INEXACTE

(30) Priorität: 26.06.1995 AT 108895
(43) Veröffentlichungstag der Anmeldung: 15.04.1998
(73) Patentinhaber: ERICSSON AUSTRIA AKTIENGESELLSCHAFT, 1121 Wien (AT)
(72) Erfinder: LANGMANN, Peter, A-3244 Ruprechtshofen (AT)
(74) Vertreter: Gibler, Ferdinand, Dipl.-Ing. Dr. techn.
(86) Internationale Anmeldenummer: AT9600111
(87) Internationale Veröffentlichungsnummer: WO9701898

(56) Entgegenhaltungen:
- TRANSACTIONS OF THE INSTITUTE OF ELECTRONICS, INFORMATION AND COMMUNICATION ENGINEERS E, MAY 1989, JAPAN, Bd. E72, Nr. 5, ISSN 0913-574X, Seiten 494-501, XP002019651 NAKAMURA M ET AL: "Performance evaluation for ARQ schemes in power and/or bandwidth limited systems"
- IEEE IN HOUSTON. GLOBECOM '93. IEEE GLOBAL TELECOMMUNICATIONS CONFERENCE, INCLUDING A COMMUNICATIONS THEORY MINI-CONFERENCE. TECHNICAL PROGRAM CONFERENCE RECORD (CAT. NO.93CH3250-8), PROCEEDINGS OF GLOBECOM '93. IEEE GLOBAL TELECOMMUNICATIONS CONFERE, ISBN 0-7803-0917-0, 1993, NEW YORK, NY, USA, IEEE, USA, Seiten 1815-1821 vol.3, XP000436123 LI WEI ET AL: "A new selective retransmitted ARQ system"
- IEEE TRANSACTIONS ON COMMUNICATIONS, JUNE 1990, USA, Bd. 38, Nr. 6, ISSN 0090-6778, Seiten 773-781, XP002019654 FANTACCI R: "Performance evaluation of efficient continuous ARQ protocols"
- IEEE TRANSACTIONS ON COMMUNICATIONS, MARCH 1986, USA, Bd. COM-34, Nr. 3, ISSN 0090-6778, Seiten 244-249, XP002019655 BRUNEEL H ET AL: "On the throughput performance of some continuous ARQ strategies with repeated transmissions"

## Beschreibung

Die Erfindung betrifft ein Verfahren zur Wiederholung fehlerhaft übertragener Daten, wobei zur Übertragung zwischen Teilnehmern mit jeweils zumindest einem Sende- und zumindest einem Empfangsteil beim sendenden Teilnehmer ein Datenstrom in Datenwörter mit vorbestimmbarer Länge unterteilt und zu Datenwörtern zusammengefaßt wird und die einzelnen Datenwörter in einem Sendepufferspeicher zwischengespeichert, gegebenenfalls über eine Sendeeinheit, gesendet und, vom empfangenden Teilnehmer, gegebenenfalls in einer Empfangseinheit, empfangen und nach Zwischenspeicherung in einem Empfangspufferspeicher ausgegeben werden, wobei ein während der Übertragung aufgetretener Fehler erkannt und über den Sendeteil des empfangenden Teilnehmers und den Empfangsteil des sendenden Teilnehmers ein Befehl zum nochmaligen Senden des fehlerhaft übertragenen Datenwortes an den Sendeteil des sendenden Teilnehmers gegeben wird, wobei die ARQ-Übertragungswiederholungen der fehlerhaft übertragenen Daten über einen im Zeitmittel konstanten, vorbestimmbaren Anteil der in der gemittelten Zeitspanne übertragenen Anzahl von Datenwörtern durchgeführt werden.

Solche bekannte ARQ-Verfahren werden in unterschiedlichen Anwendungsfällen zur Sicherung einer fehlerfreien Datenübertragung eingesetzt. Dazu wird das übertragene Datenwort nach seinem Empfang in einer Fehlererkennungseinheit mittels einer festgelegten Routine geprüft. Tritt ein fehlerhaftes Datenwort auf, wird der sendende Teilnehmer aufgefordert dieses solange zu wiederholen, bis beim empfangenden Teilnehmer die Richtigkeit der Übertragung bestätigt wird.

Dabei kann es aber vorkommen, daß die die fehlerhafte Übertragung bewirkende Störung über einen längeren Zeitraum öfter auftritt, wodurch die fehlerhaften Datenwörter immer wieder vom empfangenden Teilnehmer angefordert werden, während keine weiteren Daten mehr übertragen werden können. Aus diesem Grund kann es zu einem starken Absinken der übertragenen Informationsrate kommen.

Aus dem Artikel Nakamura M. et al: "Performance evaluation for ARQ schemes in power and/or bandwidth limited systems", The Transactions of the Institut of Electronics, Information and Communication Engineers (IEICE), Bd. E72, Nr.5, Mai 1989, Seiten 494 bis 501 geht ein Verfahren zur Wiederholung fehlerhaft übertragener Daten hervor, bei dem ein zu sendender Datenstrom in Datenwörter mit vorbestimmbarer Länge unterteilt und zu Datenwörtern zusammengefaßt wird, welche Datenwörter in einem Sendepufferspeicher zwischengespeichert, gesendet und beim Empfänger nach Zwischenspeicherung in einem Empfangspufferspeicher ausgegeben werden. Während der Übertragung aufgetretene Fehler werden erkannt und über einen vom Empfänger ausgehenden Befehl (NACK), der über einen Rückwärtskanal übertragen wird, nochmals gesendet. In der aus Fig.6 dieser Druckschrift zu erkennenden Rahmenstruktur ist ein konstanter Anteil L_{R} für die Wiederholung fehlerhafter Datenwörter vorgesehen. Bei einer Anzahl zu wiederholender Datenwörter größer als LR, werden die am längsten gespeicherten Wörter wiederholt, während der Rest auf Wiederholung im darauffolgenden Rahmen warten muß. Kann dabei ein Datenwort in der durch den Pufferspeicher begrenzten Zeitspanne nicht so oft wiederholt werden, um es korrekt empfangen zu können, so schätzt der Empfänger dieses aufgrund der bereits empfangenen Datenwörter und ersetzt es in der ausgegebenen Information aufgrund dieses Schätzwertes.

Die Aufgabe der Erfindung besteht darin, ausgehend vom eingangs genannten Verfahren ein solches Verfahren dahingehend zu verbessern, daß der Datendurchsatz zwischen sendendem und empfangendem Teilnehmer im wesentlichen konstant gehalten werden kann.

Erfindungsgemäß wird dies dadurch erreicht, daß bei Überschreiten des für die Übertragungswiederholung vorgesehenen Anteils durch fehlerhafte Datenwörter die fehlerhaften Datenwörter aus dem Empfangspufferspeicher in einer mit ihrer ursprünglichen Information nicht übereinstimmenden Form, z.B. mit einem vorbestimmbaren Wert, ausgegeben werden.

Es steht während der Datenübertragung ständig eine Übertragungs-Überkapazität zur Verfügung. Wird ein Datenwort fehlerhaft empfangen, fordert der Empfänger nur so oft eine Wiederholung an, wie es im Rahmen der im Zeitmittel zur Verfügung stehenden Überkapazität möglich ist, sodaß unbeeinflußt durch die Übertragungswiederholungen der nominelle Datendurchsatz konstant gehalten werden kann. Im fehlerfreien Übertragungsfall wird ein höher redundantes Signal übermittelt. Die Dauer der Zeitspanne, über die die Zeitmittelung erfolgt, ist im wesentlichen durch die Speicherkapazität des eingesetzten ARQ-Puffers begrenzt. Das erfindungsgemäße Verfahren eignet sich dabei grundsätzlich für alle Arten der Datenübertragung, jedoch im speziellen für Datenströme, welche eine konstante Bitrate benötigen, um zeitliche Beziehungen verschiedener Einheiten aufrecht zu erhalten, wie dies z.B. für kodierte und gegebenenfalls komprimierte Daten wie sie für eine Video- und/oder Audioübertragung notwendig sind, zutrifft.

Für einen qualitativ gute Übertragungsvorgang kann es gemäß einer Ausführungsform der Erfindung vorteilhaft sein, daß der Anteil der im Zeitmittel durchgeführten Übertragungswiederholungen zwischen 2 und 7% gewählt wird.

In diesem Zusammenhang hat es sich als besonders vorteilhaft erwiesen, wenn die Übertragungswiederholungen gemäß einer weiteren Variante der Erfindung der Anteil der im Zeitmittel durchgeführten Übertragungswiederholungen ungefähr 3,3% gewählt wird, da sich in diesem Fall eine sehr hohe konstante Übertragungsrate bei guter Übertragungsqualität erreichen läßt.

Nach einer anderen Variante der Erfindung kann vorgesehen sein, daß die Datenwörter aus dem Sendepufferspeicher schneller übertragen werden als sie in diesen eingeschrieben werden, wobei die entstehende Lücke in der Übertragung durch Wiederholen von einem oder mehreren Datenwörtern gefüllt wird.

Dadurch ist während der Übertragung ein fester Anteil an Überkapazität vorgesehen, der im Bedarfsfall für Wiederholungen genutzt werden kann. Die im störungsfreien Fall überschüssigen Datenwörter bzw. die überschüssige Kapazität beeinträchtigen zwar geringfügig die Störsicherheit der übertragenen Daten, dafür kann es aber nicht zu einem Stau immer wieder wiederholter Datenwörter kommen, der ein starkes Absinken der Übertragungsrate bewirkt.

Im folgenden wird die Erfindung anhand eines in der Zeichnung dargestellten Ausführungsbeispieles näher erläutert.

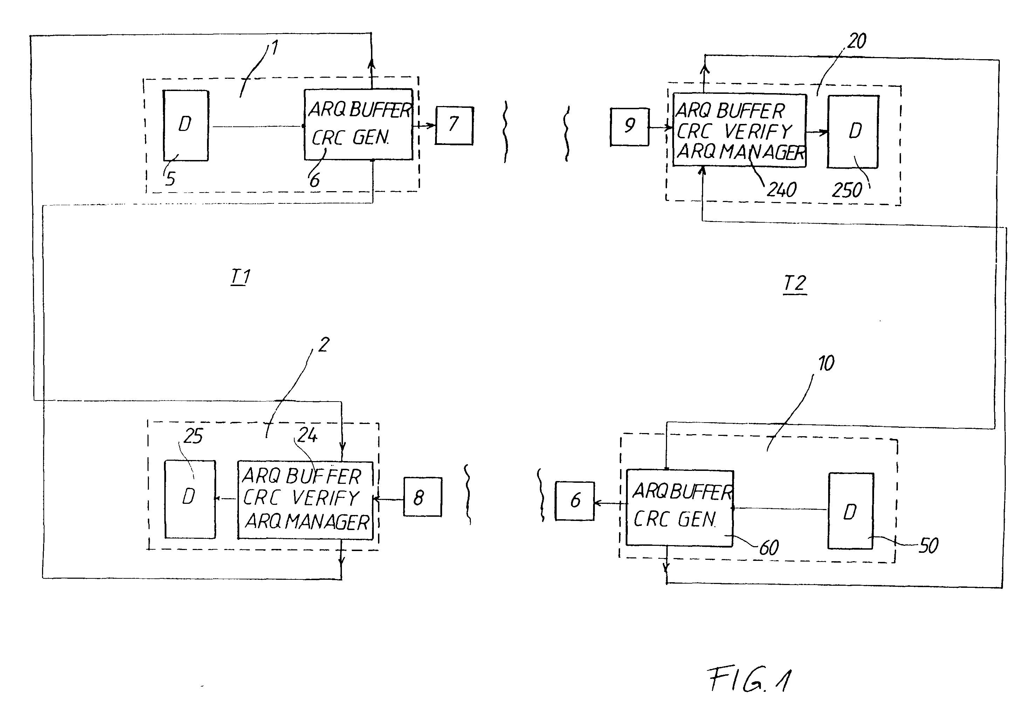

Es zeigt dabei Fig. 1 ein Blockschaltbild zur Durchführung einer Ausführungsform des erfindungsgemäßen Verfahrens.

Bei einer bidirektionalen Datenübertragung von digitalen Daten zwischen zwei Teilnehmern T1, T2 gemäß dem in Fig.1 gezeigten Blockschaltbild ist für jeden Teilnehmer T1, T2 je ein Sende 1, 10- und ein Empfangsteil 2, 20 vorgesehen. Der hier beispielsweise sendende Teilnehmer T1 unterteilt die aus einer Datenquelle 5 anstehenden digitalen Daten in Datenwörter mit vorbestimmbarer Länge, sodaß jeweils immer ein ganzes solches Wort eine Weiterbehandlung erfährt. Dabei ist der Ausdruck Datenwort ganz allgemein als eine Ansammlung von digitalen Daten zu verstehen und in keiner Weise hinsichtlich der Anzahl oder Art der von diesem beinhalteten Daten eingeschränkt. Ein Datenwort kann z.B. nur ein aber auch mehrere Bit digitaler Information enthalten. Auch kann jede mögliche Art von Daten für dieses Übertragungsverfahren verwendet werden. Nach der Unterteilung in Datenwörter erfolgt eine Zwischenspeicherung in einem ARQ-Sendepufferspeicher 6 bevor diese in einer Sendeeinheit 7 in ein Sendesignal umgewandelt und zu dem empfangenden Teilnehmer T2 gesendet werden, wo sie in einer Empfangseinheit 9 wieder umgewandelt werden. Die Sende- und Empfangseinheit, die die Umsetzung eines üblicherweise etwa durch Modulation erzeugten Sende- bzw. Empfangssignals vornehmen, können entfallen, wenn die Daten direkt übertragen werden.
Ein während der Übertragung aufgetretener Fehler wird durch eine Fehlererkennungseinheit (CRC) in einem ARQ-Empfangspufferspeicher 240 erkannt und über die ARQ-Steuerung an den Sendeteil 10 des empfangenden Teilnehmers T2 ein Befehl abgegeben, der über die Sendeeinheit 6 an den Empfangsteil 2 des sendenden Teilnehmers T1 übertragen und dort erkannt wird, sodann dieser Befehl an den ARQ-Sendepufferspeicher 6 zum nochmaligen Senden des fehlerhaft übertragenen Datenwortes an den Sendeteil 1 des sendenden Teilnehmers T1 gegeben wird.
Erfindungsgemäß werden die ARQ-Übertragungswiederholungen der fehlerhaft übertragenen Daten über einen im Zeitmittel konstanten, vorbestimmbaren Anteil der in der gemittelten Zeitspanne übertragenen Anzahl von Datenwörtern durchgeführt. Die ARQ-Übertragungswiederholungen der fehlerhaft übertragenen Daten werden somit über einen konstanten, vorbestimmbaren Anteil der in jeweils einer vorbestimmbaren Zeitspanne übertragenen Anzahl von Datenwörten durchgeführt. Die aufeinanderfolgenden vorbestimmbaren Zeitspannen sind im wesentlichen durch die Speicherkapazität des Sende- bzw. Empfangspufferspeichers begrenzt. Bei Datenübertragungen wird daher in jeder definierten Zeitspanne ein bestimmter Anteil für die Wiederholungsübertragung von fehlerhaften Datenwörtern freigehalten und bei Bedarf in diesem Zeitanteil eine entsprechende Anzahl von Datenwörtern wiederholt. Die Wiederholung kann zu irgendeinem Zeitpunkt innerhalb dieser vorbestimmten Zeitspanne geschehen.
Das erfindungsgemäße Verfahren eignet sich dabei grundsätzlich für alle Arten der Datenübertragung, jedoch im speziellen für Datenströme, welche eine konstante Bitrate benötigen, um zeitliche Beziehungen verschiedener Einheiten aufrecht zu erhalten, wie dies z.B. für kodierte und gegebenenfalls komprimierte Daten wie sie für eine Video- und/oder Audioübertragung notwendig sind. zutrifft.
Dazu werden beim Senden der Daten die Datenwörter ständig in den ARQ-Sendepuffer 6 eingeschrieben und von diesem an die Sendeeinheit 7 weitergegeben. Dabei werden die vom Puffer 6 abgehenden Daten schneller übertragen als sie in diesen eingetragen werden. Die entstehende Lücke in der Übertragung wird durch Wiederholen von einem oder mehreren Datenwörtern gefüllt, diese werden jedoch empfängerseitig als wiederholter Block erkannt und automatisch beseitigt. Somit wird im fehlerfreien Übertragungsfall ständig mit Überkapazität gesendet. ohne daß der übertragene Informationsgehalt größer ist. Wird der für die Übertragungswiederholung vorgesehene Anteil durch fehlerhafte Datenwörter überschritten, sodaß mehr fehlerhafte Datenwörter im Empfangsteil 20 eintreffen, als wiederholt werden können. so wird der Überschuß der fehlerhaften Datenwörter aus dem Empfangspufferspeicher 240 transparent, d.h. in einer mit ihrer ursprünglichen Information nicht übereinstimmenden Form, z.B. mit einem vorbestimmbaren Wert, ausgegeben.
Sobald ein Übertragungsfehler auftritt, erkennt der empfangende Teilnehmer T2 den Fehler mittels seiner CRC- Fehlererkennung in der ARQ-Einheit 240 und gibt darauf den Befehl zur Datenwiederholung an den Sendteil 10 des Teilnehmers 2. Beim Teilnehemr T1 wird diese Information nach Durchlaufen der Empfängereinheit 8 als Steuerbefehl an den ARQ-Puffer 6 gegeben, die fehlerhafte Übertragung zu wiederholen.
Für die Wiederholungsübertragung der fehlerhaften Datenwörter steht erfindungsgemäß im Zeitmittel nur ein fester vorbestimmbarer Anteil zur Verfügung, wobei bei vielen Anwendungen sich ein Anteil von 2 bis 7% als besonders vorteilhaft erwiesen hat. Besonders bewährt hat sich ein Anteil von ungefähr 3,3%, da in diesem Fall trotz fehlerhafter Übertragungen eine sehr hohe konstante Datenübertragungsrate erzielt werden konnte, wobei der übertragene Informationsgehalt weit höher war als der mit einem herkömmlichen ARQ-Verfahren erzielbaren.
Der Anteil und die Anzahl der Datenwörter für eine erfindungsgemäße Übertragungswiederholung sind in diesem Zusammenhang keiner Einschränkung unterworfen und können innerhalb des technisch Realisierbaren beliebig den jeweiligen Verhältnissen angepaßt werden.
Als praxisnahes Anwendungsbeispiel soll hier ein Zeitmultiplexverfahren angeführt sein, wobei der Übertragungs-Zeitrahmen mehrere Zeitschlitze aufweist, von denen z.B. im Zeitmittel ein Zeitschlitz für Übertragungswiederholungen vorgesehen sein kann.
Nach einer Fehlübertragung wird nun in einer der darauffolgenden Zeitrahmen die Wiederholungsübertragung durchgeführt, die sich auch über mehrere nacheinanderfolgende Zeitschlitze erstrecken kann. Gemittelt über die Zeit kann beispielsweise nur ein Zeitschlitz pro Rahmen für die Wiederholungen benutzt werden.
Die Zeitspanne, über die dabei das Zeitmittel berechnet wird, ist im wesentlichen durch die Kapazität des ARQ-Pufferspeichers 6 festgelegt. Sobald dieser mit Information vollgeschrieben ist, können keine weiteren Wiederholungen durchgeführt werden und der fehlerhafte Datenblock muß empfängerseitig als transparent ausgegeben werden.
Gegenüber einem herkömmlichen ARQ-Verfahren ist die für die Datenwiederholungen festgelegte Zeitspanne erfindungsgemäß im Zeitmittel fixiert. Dadurch kann es nicht passieren. daß aufgrund einer länger andauernden Störung die Übertragung solange wiederholt wird bis sie fehlerfrei ist und damit die Übertragungszeit sich stark erhöht. Durch das bekannte ARQ-Verfahren wird die Datenübertragung auch bei beliebigen Störungen solange wiederholt, bis sie fehlerfrei empfangen wird, wodurch der Datendurchsatz aber sehr stark sinkt. Hingegen wird durch die feste Überkapazität. die zwischen 2 und 7%, vorzugsweise aber bei 3. 3% liegt, im erfindungsgemäßen Verfahren die Übertragung nur so oft wiederholt, wie es im Rahmen der Überkapazität möglich ist, um den nominellen Datendurchsatz aufrecht zu erhalten. Kann bei mehreren aufeinanderfolgenden falschen Datenblöcken einer nicht mehr wiederholt und richtig empfangen werden, wird er transparent ausgegeben.

## Patentansprüche

1. Verfahren zur Wiederholung fehlerhaft übertragener Daten (ARQ), wobei zur Übertragung zwischen Teilnehmern (T1, T2) mit jeweils zumindest einem Sende (1, 10)- und zumindest einem Empfangsteil (2, 20) beim sendenden Teilnehmer ein Datenstrom in Datenwörter mit vorbestimmbarer Länge unterteilt und zu Datenwörtern zusammengefaßt wird und die einzelnen Datenwörter in einem Sendepufferspeicher (6, 60) zwischengespeichert, gegebenenfalls über eine Sendeeinheit (7, 6), gesendet und, vom empfangenden Teilnehmer, gegebenenfalls in einer Empfangseinheit (9, 8), empfangen und nach Zwischenspeicherung in einem Empfangspufferspeicher (240, 24) ausgegeben werden, wobei ein während der Übertragung aufgetretener Fehler erkannt und über den Sendeteil (10, 1) des empfangenden Teilnehmers und den Empfangsteil (2, 20) des sendenden Teilnehmers ein Befehl zum nochmaligen Senden des fehlerhaft übertragenen Datenwortes an den Sendeteil (1, 10) des sendenden Teilnehmers gegeben wird, und wobei die ARQ-Übertragungswiederholungen der fehlerhaft übertragenen Daten über einen im Zeitmittel konstanten, vorbestimmbaren Anteil der in der gemittelten Zeitspanne übertragenen Anzahl von Datenwörtern durchgeführt werden, **dadurch gekennzeichnet**, daß bei Überschreiten des für die Übertragungswiederholung vorgesehenen Anteils durch fehlerhafte Datenwörter die fehlerhaften Datenwörter aus dem Empfangspufferspeicher (240, 24) in einer mit ihrer ursprünglichen Information nicht übereinstimmenden Form, z.B. mit einem vorbestimmbaren Wert, ausgegeben werden.

2. Verfahren nach Anspruch 1, **dadurch gekennzeichnet**, daß der Anteil der im Zeitmittel durchgeführten Übertragungswiederholungen zwischen 2 und 7% gewählt wird.

3. Verfahren nach Anspruch 1, **dadurch gekennzeichnet**, daß der Anteil der im Zeitmittel durchgeführten Übertragungswiederholungen ungefähr 3,3% gewählt wird.

4. Verfahren nach Anspruch 1, 2 oder 3, **dadurch gekennzeichnet**, daß die Datenwörter aus dem Sendepufferspeicher (6, 60) schneller übertragen werden als sie in diesen eingeschrieben werden, wobei die entstehende Lücke in der Übertragung durch Wiederholen von einem oder mehreren Datenwörtern gefüllt wird.

## Claims

1. A method of re-sending incorrectly transmitted data (ARQ), providing for the purpose of transmission between subscribers (T1, T2) with at least one send unit (1, 10) and at least one receiver unit (2, 20) a data stream at the sending subscriber which is subdivided into data words of a predetermined length and is combined into data words and the individual data words are intermediately stored in a send buffer memory (6, 60), and optionally transmitted via a send unit (7, 6) and received by the receiving subscriber optionally in a receiver unit (9, 8) and output after the intermediate storage in a receive buffer memory (240, 24), with any error occurring during the transmission being recognized and a command being given for the purpose of renewed transmission of the incorrectly transmitted data word to the send unit (1, 10) of the transmitting subscriber via the send unit (10, 1) of the receiving subscriber and the receiver unit (2, 20) of the sending subscriber, and with the ARQ transmission repetitions of the incorrectly transmitted data being performed over a predeterminable share which is constant over the time average of the number of data words transmitted in the averaged time interval, characterized in that on exceeding the share provided for the repetition of the transmission by incorrect data words the incorrect data words are output from the receive buffer memory (240, 24) in a form which does not correspond to the original information, e.g. with a predeterminable value.

2. A method as claimed in claim 1, characterized in that the share of the transmission repetitions performed in the time average is chosen between 2 and 7%.

3. A method as claimed in claim 1, characterized in that the share of the transmission repetitions performed in the time average is chosen with approx. 3.3%.

4. A method as claimed in claim 1, 2 or 3, characterized in that the data words from the send buffer memory (6, 60) are transmitted more quickly than they are written into the same, with the produced gap in the transmission being filled by the repetition of one or several data words.

## Revendications

1. Procédé de répétition de données transmises de façon défectueuse (ARQ), dans lequel, en vue de la transmission entre les participants (T1, T2) qui comprennent au moins une partie émettrice (1, 10) et au moins une partie réceptrice (2, 20), un flux de données de longueur prédéterminée est divisé chez le participant émetteur en mots de données d'une longueur pouvant être prédéterminée et assemblé en mots de données, et les mots de données sont stockés dans une mémoire tampon d'émission (6, 60), envoyé, éventuellement par une unité émettrice (7, 6), reçu par le participant récepteur, éventuellement dans une unité réceptrice (9, 8), et sorti après stockage intermédiaire dans une mémoire tampon de réception (240, 24), une erreur survenue pendant la transmission étant identifiée et un ordre de répétition de la transmission du mot de donnée défectueux par la partie émettrice (1, 10) du participant émetteur étant transmis par la partie émettrice (10, 1) du participant récepteur et la partie réceptrice (2,20) du participant émetteur, et les répétitions de transmissions ARQ des données transmises de façon défectueuse étant exécutées sur une partie, constante en moyenne dans le temps et pouvant être prédéterminée, du nombre de mots de données transmis pendant l'intervalle de temps moyen, caractérisé en ce que lorsque la proportion prévue pour la répétition de la transmission en raison de mots de données défectueux est dépassée, les mots de données défectueux sont sortis de la mémoire tampon de réception (240, 24) sous une forme ne concordant pas avec les informations d'origine, par exemple avec une valeur pouvant être prédéterminée.

2. Procédé selon la revendication 1, caractérisé en ce que la proportion des répétitions de transmission réalisées en moyenne dans le temps est fixée entre 2 et 7 %.

3. Procédé selon la revendication 1, caractérisé en ce que la proportion des répétitions de transmission réalisées en moyenne dans le temps est fixée approximativement à 3,3 %.

4. Procédé selon la revendication 1, 2 ou 3, caractérisé en ce que les mots de données sont émis plus rapidement à partir de la mémoire tampon d'émission (6, 60) qu'ils n'y sont inscrits, le hiatus dans la transmission étant occupé par la répétition d'un ou plusieurs mots de données.
